# FASCICULE DE BREVET EUROPEEN

(11) **EP 2 684 451 B1**
(45) Date de publication et mention de la délivrance du brevet: **22.04.2015**
(21) Numéro de dépôt: 13173186.1
(22) Date de dépôt: 21.06.2013
(51) Int. Cl.: A01M 7/00

(54) **Dispositif de suspension pendulaire de rampe de pulvérisation pour engin agricole**
Pendelartige Aufhängevorrichtung einer Sprührampe für landwirtschaftliche Maschinen
A pendulum suspension device of a spray ramp for an agricultural machine

(30) Priorité: 12.07.2012 FR 1256705
(43) Date de publication de la demande: 15.01.2014
(73) Titulaire: EXEL INDUSTRIES, 51200 Epernay (FR)
(72) Inventeur: Ballu, Patrick Jean Marie, 51100 Reims (FR)
(74) Mandataire: Gaillarde, Frédéric F. Ch.

(56) Documents cités:
- EP-A1- 0 103 522
- DE-A1- 10 314 686
- GB-A- 2 222 755
- GB-A- 2 457 388

## Description

La présente invention se rapporte à un dispositif de suspension pendulaire de rampe de pulvérisation, et à un engin agricole équipé d'un tel dispositif.

Un tel dispositif est connu par exemple par EP0103522.

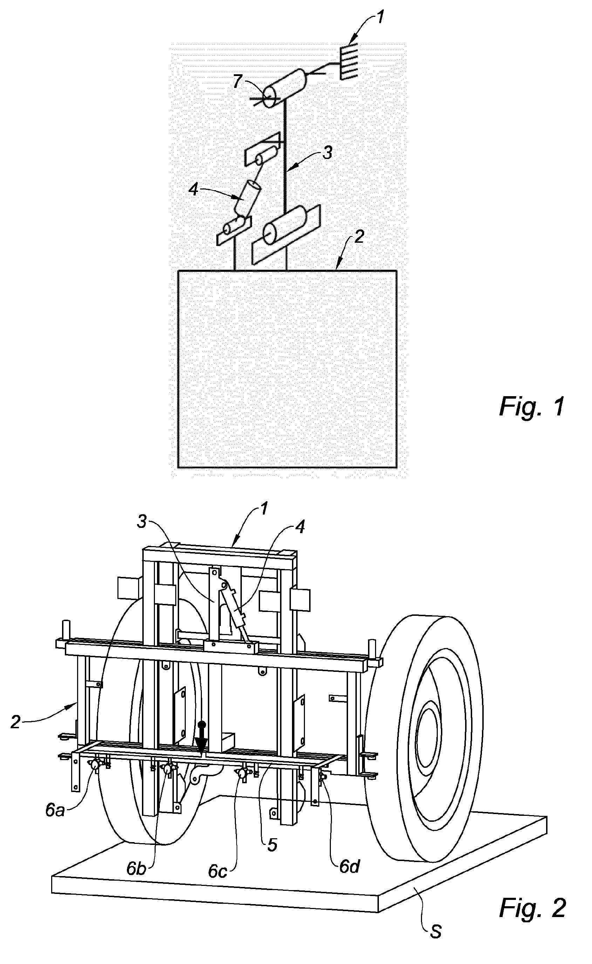

On connaît de la technique antérieure, un dispositif de suspension pendulaire de rampe de pulvérisation sur un engin agricole, comprenant typiquement, comme cela est visible sur les figures 1 à 3, un cadre fixe 1 destiné à être porté par un engin agricole, un cadre mobile 2 relié de manière pendulaire par une bielle de suspension 3 au châssis 1, et un vérin de correction 4 interposé entre le cadre mobile 2 et le cadre fixe 1.

Le cadre mobile 2 est destiné à supporter des rampes de pulvérisation, dont une partie 5 supportant des buses de pulvérisation 6a, 6b, 6d est visible sur les figures ci-annexées.

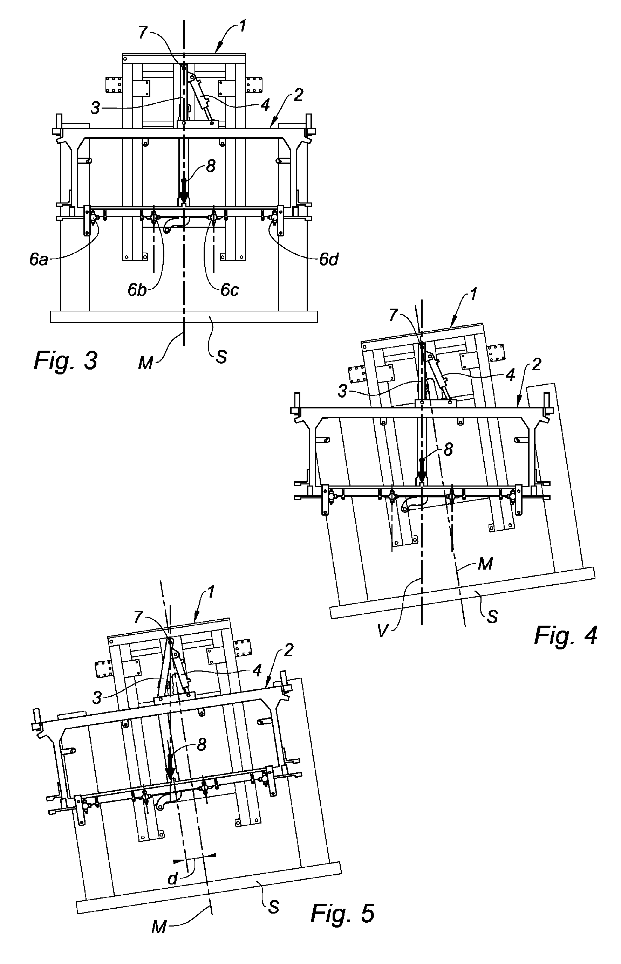

Lorsque l'engin circule sur sol plat (voir figure 3) le cadre mobile 2 est parallèle au sol, et donc sensiblement perpendiculaire au cadre fixe 1.

Lorsque l'engin circule sur un terrain en dévers (voir figure 4), le point de suspension 7 et le centre de gravité 8 du cadre mobile 2 ont tendance à rester alignés sur la verticale V, ce qui signifie en d'autres termes que la rampe de pulvérisation a tendance à conserver une position horizontale.

Il en résulte une inclinaison relative du cadre mobile 2 par rapport au cadre fixe 1 et par rapport au sol S.

Comme on souhaite obtenir une pulvérisation homogène, il est nécessaire d'établir un parallélisme entre le cadre mobile 2, et donc les rampes de pulvérisation, et le sol S, de manière à arriver à la configuration représentée à la figure 5.

Cette configuration est obtenue en agissant sur le vérin 4.

Lors de cet actionnement, de par la tendance du centre de gravité 8 et du point de suspension 7 du cadre mobile 2 à rester alignés selon la verticale V, ce centre de gravité 8 s'écarte d'une certaine distance d de la ligne médiane M du cadre fixe 1.

Il en résulte donc un décalage latéral du cadre mobile 2, et des rampes de pulvérisations associées, par rapport à cette ligne médiane M.

Ceci est préjudiciable notamment car il peut en résulter des manques ou des doublements de pulvérisation lors des passages suivants de l'engin agricole, étant noté que des passages successifs sont de préférence séparés d'une distance constante.

La présente invention a notamment pour but de remédier à ces inconvénients.

On atteint ce but de l'invention avec un dispositif de suspension pendulaire de rampe de pulvérisation, comprenant :
- un cadre fixe destiné à être porté par un engin agricole,
- un cadre mobile destiné à porter une ou plusieurs rampes de pulvérisation,
- au moins une bielle de suspension pendulaire dudit cadre mobile sur ledit cadre fixe, et
- au moins un vérin pour faire varier l'inclinaison dudit cadre mobile par rapport audit cadre fixe,
remarquable en ce que ledit vérin est interposé entre ledit cadre fixe et ladite bielle, et en ce qu'il est prévu des moyens pour déplacer par rapport audit cadre mobile le point d'accroche de ladite bielle sous l'action dudit vérin, de manière à recentrer ledit cadre mobile par rapport au cadre fixe lorsque ledit point d'accroche est déplacé.

Grâce à ces caractéristiques, on obtient un dispositif permettant de compenser les déplacements latéraux du cadre mobile inhérents à sa modification d'inclinaison par rapport au cadre fixe : on supprime de la sorte les problèmes de manque ou de doublement de pulvérisation de la technique antérieure.

Suivant d'autres caractéristiques optionnelles de ce dispositif de la technique antérieure :
- lesdits moyens de déplacement comprennent une crémaillère solidaire dudit cadre mobile, au moins un premier pignon monté rotatif sur le point d'accroche de ladite bielle et en prise avec cette crémaillère, et des moyens pour mettre ce pignon en rotation sous l'action dudit vérin ;
- lesdits moyens de mise en rotation comprennent au moins un deuxième pignon solidaire en rotation dudit premier pignon, en prise avec une chaîne reliée à ses deux extrémités audit cadre fixe ;
- des moyens élastiques peuvent être interposés entre les extrémités de ladite chaîne et ledit cadre fixe ;
- des moyens élastiques et/ou d'amortissement peuvent être interposés entre ledit cadre fixe et ledit cadre mobile.

La présente invention se rapporte également à en engin de pulvérisation agricole équipé d'un tel dispositif de suspension.

D'autres caractéristiques et avantages de la présente invention apparaitront à la lumière de la description qui va suivre, et à l'examen des figures ci-annexées, dans lesquelles :
- la figure 1 est une vue schématique d'un dispositif de suspension de la technique antérieure, décrit en préambule de la présente description,
- la figure 2 est une vue en perspective de ce dispositif de la technique antérieure,
- les figures 3 à 5 sont des vues de derrière de ce dispositif de la technique antérieure, dans différentes configurations de fonctionnement,
- la figure 6 est une vue schématique d'un dispositif de suspension selon la présente invention,
- les figures 7 et 8 sont des vues en perspective, respectivement assemblée et éclatée, du dispositif de suspension selon l'invention,
- les figures 9 à 12 représentent le dispositif selon l'invention pour différentes inclinaisons de sol, et
- la figure 13 représente le dispositif selon l'invention en configuration de virage.

Sur l'ensemble de ces figures, les références identiques ou analogues désignent des organes ou ensembles d'organes identiques ou analogues.

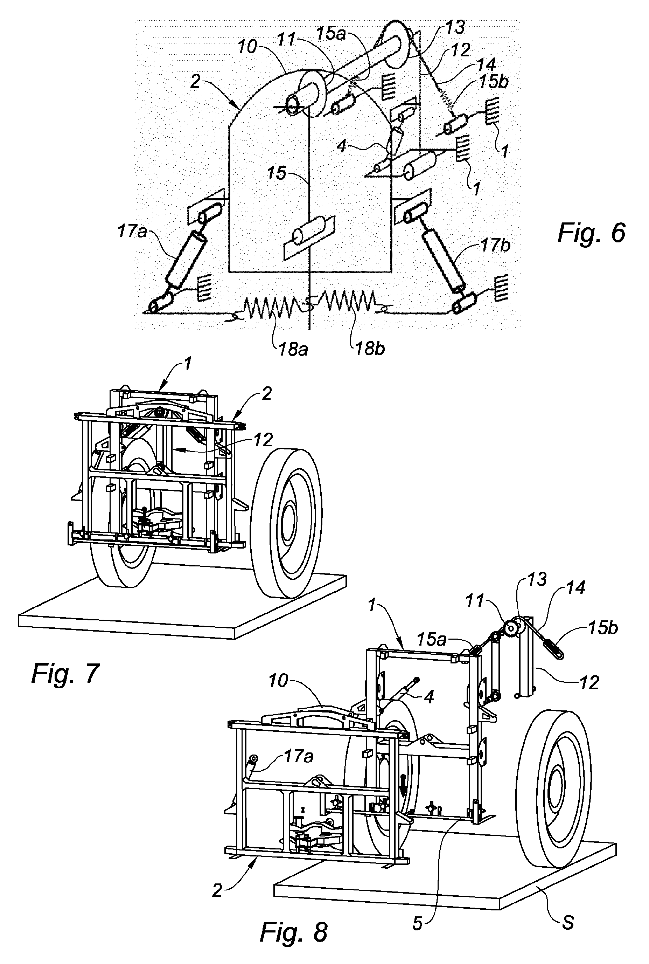

On se reporte à présent aux figures 6 à 9, sur lesquelles on peut voir que le cadre mobile 2 comporte dans sa partie supérieure une crémaillère 10 qui engrène avec un premier pignon 11 monté rotatif sur une bielle 12 elle-même montée pivotante sur le cadre fixe 1, un vérin d'actionnement 4 étant interposé entre cette bielle 12 et le cadre fixe 1.

Un deuxième pignon 13 solidaire en rotation du premier pignon 11 est en prise avec une chaîne 14 dont les deux extrémités peuvent être reliées au cadre fixe 1 par l'intermédiaire de ressorts respectifs 15a et 15b.

De manière optionnelle, une bielle secondaire 15 peut être interposée entre la bielle 12 et le cadre mobile 2.

De manière également optionnelle, des moyens d'amortissement 17a, 17b et élastiques 18a ; 18b peuvent être interposés entre le cadre mobile 2 et le cadre fixe 1.

Le mode de fonctionnement et les avantages de ce dispositif vont être décrits dans ce qui suit.

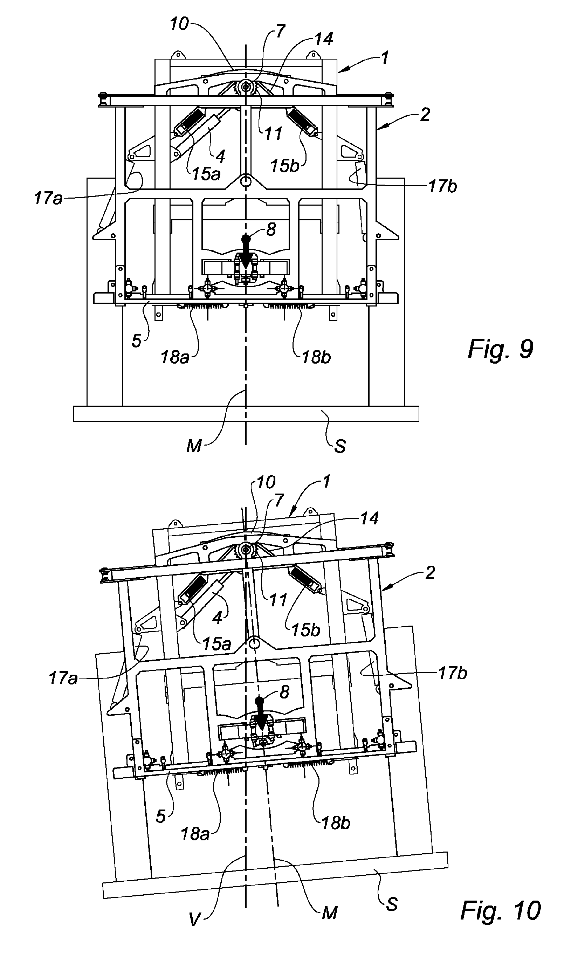

Comme cela est visible à la figure 9, lorsque l'engin agricole circule sur sol plat, le cadre mobile 2 est sensiblement parallèle au sol S et le centre de gravité 8 de ce cadre mobile se trouve sur la ligne médiane M de l'engin. Lorsque l'engin circule sur un sol S en faible dévers, comme cela est visible à la figure 10, la configuration de la figure 9 est conservée, de par la résistance opposée par les moyens élastiques 18a, 18b.

Il en résulte que le centre de gravité 8 du cadre mobile 2 s'écarte légèrement de la verticale V, mais reste sur la ligne médiane M de l'engin agricole.

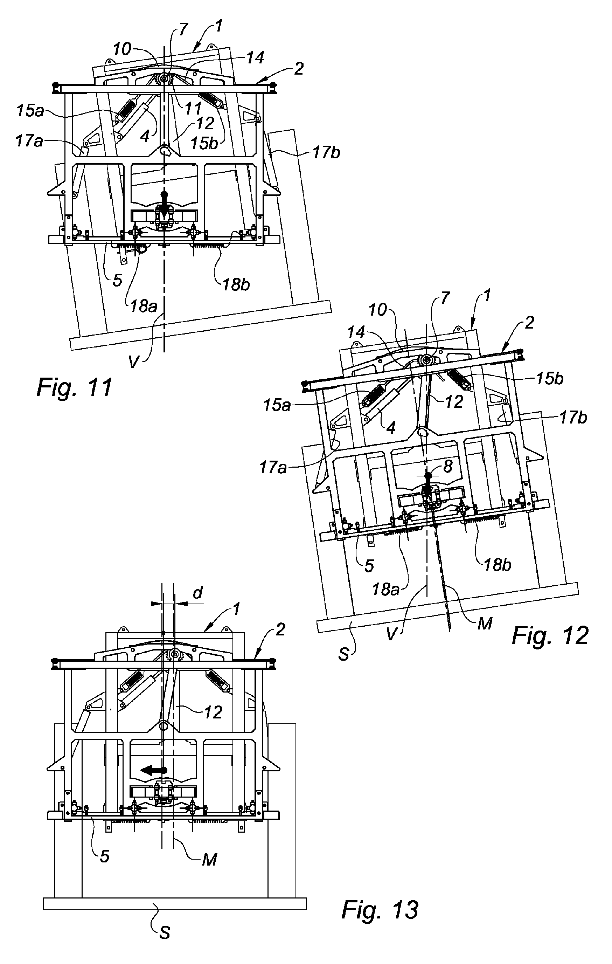

Lorsque l'engin circule sur un sol S présentant un plus fort dévers (voir figure 11) le centre de gravité 8 du cadre mobile 2 a tendance à rejoindre la verticale V, de manière à atteindre une configuration sensiblement analogue à celle de la figure 4 décrite précédemment.

Avec le dispositif selon l'invention, lorsque l'on souhaite rétablir le parallélisme du cadre mobile 2 avec le sol S, on agit sur le vérin d'actionnement 4.

Plus précisément, en partant de la configuration visible à la figure 11, on augmente la longueur du vérin 4, ce qui, de par la prise du deuxième pignon 13 avec la chaîne 14, a pour effet de faire tourner ce deuxième pignon dans le sens contraire des aiguilles d'une montre, et ainsi de faire tourner le premier pignon 11 dans le même sens.

Il en résulte que le point de suspension 7 du cadre mobile 2 par rapport à la bielle 12 est déplacé vers la droite de ce cadre mobile, comme cela est visible à la figure 12.

Un tel déplacement a pour effet de rétablir le parallélisme du cadre mobile 2 par rapport au sol, de par la tendance du centre de gravité 8 du cadre mobile 2 à rester à la verticale du point de suspension 7.

Mais également, du fait de l'extension du vérin 4, entraînant le pivotement de la bielle 12 vers la droite de la figure 12, le point de suspension 7 s'est décalé vers la droite du cadre fixe 1, permettant de ramener le centre de gravité 8 sur la ligne médiane M de l'engin agricole.

On comprend donc d'après ce qui précède que le dispositif selon l'invention, permet, de manière très simple, de recentrer le cadre mobile 2 et donc la rampe de pulvérisation associée, par rapport au cadre fixe 1 après avoir déplacé le point de suspension du cadre mobile 2 en vue de maintenir le parallélisme de ce cadre mobile par rapport au sol S.

On supprime de la sorte tous les problèmes de décalage constatés dans la technique antérieure, et on peut notamment assurer un recouvrement optimal des zones pulvérisées lors des passages successifs de l'engin agricole.

On notera par ailleurs, comme cela est visible à la figure 13, que l'inclinaison du cadre mobile 2 par rapport au cadre fixe 1 lors des demi tours de l'engin agricole, dus à la force centrifuge appliquée à l'ensemble cadre mobile 2 + rampe de pulvérisation 5, peuvent être réduits grâce au dispositif selon l'invention, limitant ainsi les contacts entre le sol et la rampe.

En effet, lors d'un demi-tour de l'engin agricole, la bielle 12 est ramenée dans sa position médiane, visible à la figure 4, et bloquée dans cette position par le vérin d'actionnement 4.

Toutefois, les pignons 11, 13 demeurent libres de tourner par rapport à cette bielle.

Il en résulte qu'un effort centrifuge ayant tendance à imprimer un décalage d au cadre mobile 2 par rapport à la médiane M de l'engin, a pour effet de mettre en rotation les deux pignons 11, 13 sous l'action de la crémaillère 10, laquelle rotation est immédiatement amortie par les ressorts 15a, 15b.

On comprend donc que les pignons 11, 13, permettent une certaine souplesse de la liaison du cadre mobile 2 par rapport à la bielle 12, laquelle souplesse a pour simple effet d'engendrer un décalage d du centre de gravité 8 du cadre mobile 2 par rapport à la médiane M de l'engin, à l'exclusion de toutes variations sensibles d'inclinaison du cadre mobile 2 par rapport au cadre fixe 1.

Bien entendu, la présente invention n'est nullement limitée aux modes de réalisation décrits et représentés, fournis à titre de simples exemples.

## Revendications

1. Dispositif de suspension pendulaire de rampe de pulvérisation (5), comprenant :
- un cadre fixe (1) destiné à être porté par un engin agricole,
- un cadre mobile (2) destiné à porter une ou plusieurs rampes de pulvérisation (5),
- au moins une bielle de suspension pendulaire (12) dudit cadre mobile (2) sur ledit cadre fixe (1), et
- au moins un vérin (4) pour faire varier l'inclinaison dudit cadre mobile (2) par rapport audit cadre fixe (1),
remarquable en ce que ledit vérin (4) est interposé entre ledit cadre fixe (1) et ladite bielle (12), et en ce qu'il est prévu des moyens pour déplacer par rapport audit cadre mobile (2) le point d'accroche(7) de ladite bielle (12) sous l'action dudit vérin (4), de manière à recentrer ledit cadre mobile (2) par rapport au cadre fixe (1) lorsque ledit point d'accroche (7) est déplacé.

2. Dispositif selon la revendication 1, dans lequel lesdits moyens de déplacement comprennent une crémaillère (10) solidaire dudit cadre mobile (2), au moins un premier pignon (11) monté rotatif sur le point d'accroche (7) de ladite bielle (12) et en prise avec cette crémaillère (10), et des moyens pour mettre ce pignon (11) en rotation sous l'action dudit vérin (4).

3. Dispositif selon la revendication 2, dans lequel lesdits moyens de mise en rotation comprennent au moins un deuxième pignon (13) solidaire en rotation dudit premier pignon (11), en prise avec une chaîne (14) reliée à ses deux extrémités audit cadre fixe (1).

4. Dispositif selon la revendication 3, dans lequel des moyens élastiques (15a, 15b) sont interposés entre les extrémités de ladite chaîne (14) et ledit cadre fixe (1).

5. Dispositif selon l'une quelconque des revendications précédentes, dans lequel des moyens élastiques et/ou d'amortissement (17a, 17b, 18a, 18b) sont interposés entre ledit cadre fixe (1) et ledit cadre mobile (2).

6. Engin de pulvérisation agricole équipé d'un dispositif conforme à l'une quelconque des revendications précédentes.

## Patentansprüche

1. Pendelartige Aufhängungsvorrichtung einer Sprührampe (5), umfassend:
- einen festen Rahmen (1), der ausgelegt ist, um von einer landwirtschaftlichen Maschine getragen zu werden,
- einen beweglichen Rahmen (2), der ausgelegt ist, um eine oder mehrere Sprührampen (5) zu tragen,
- mindestens eine Stange zur pendelartigen Aufhängung (12) des beweglichen Rahmens (2) auf dem festen Rahmen (1), und
- mindestens eine Winde (4), um die Neigung des beweglichen Rahmens (2) mit Bezug auf den festen Rahmen (1) zu variieren,
**dadurch gekennzeichnet, dass** die Winde (4) zwischen dem festen Rahmen (1) und der Stange (12) angebracht ist, und dadurch, das sie mit Mitteln ausgestattet ist, um mit Bezug auf den beweglichen Rahmen (2) den Befestigungspunkt (7) der Stange (12) unter der Einwirkung der Winde (4) zu verschieben, um den beweglichen Rahmen (2) mit Bezug auf den festen Rahmen (1) neu zu zentrieren, wenn der Befestigungspunkt (7) verschoben wird.

2. Vorrichtung nach Anspruch 1, wobei die Verschiebungsmittel eine Zahnstange (10) umfassen, die fest mit dem bewegliche Rahmen (2) verbunden ist, mindestens ein erstes Ritzel (11), das drehbar auf dem Befestigungspunkt (7) der Stange (12) montiert und mit dieser Zahnstange (10) in Eingriff steht, und Mittel, um dieses Ritzel (11) unter der Einwirkung der Winde (4) in Drehung zu versetzen.

3. Vorrichtung nach Anspruch 2, wobei die Mittel zum In-Drehung-Versetzen mindestens ein zweites Ritzel (13) umfassen, das in Rotation fest mit dem ersten Ritzel (11) verbunden ist, in Eingriff mit einer Kette (14), die an ihren zwei Enden mit dem festen Rahmen (1) verbunden ist.

4. Vorrichtung nach Anspruch 3, wobei elastische Mittel (15a, 15b) zwischen den Enden der Kette (14) und dem festen Rahmen (1) angebracht sind.

5. Vorrichtung nach einem der vorhergehenden Ansprüche, wobei elastische und/oder Dämpfungsmittel (17a, 17b, 18a, 18b) zwischen dem festen Rahmen (1) und dem beweglichen Rahmen (2) angeordnet sind.

6. Landwirtschaftliche Sprühmaschine, die mit einer Vorrichtung nach einem der vorhergehenden Ansprüche ausgestattet ist.

## Claims

1. A pendular suspension device of spraying ramp (5), comprising :
- a stationary frame (1) intended to be carried by an agricultural machine,
- a moveable frame (2) intended to carry one or several spraying ramps (5),
- at least one pendular suspension rod (12) for connecting said moveable frame (2) on said stationary frame (1), and
- at least one jack (4) for making the inclination of said moveable frame (2) vary with respect to said stationary frame (1),
**characterized in that** said jack (4) is interposed between said stationary frame (1) and said connecting rod (12), and **in that** there are provided means for displacing with respect to said moveable frame (2) the fastening point (7) of said connecting rod (12) under the action of said jack (4), in such a manner as to recenter said moveable frame (2) with respect to the stationary frame (1) when said fastening point (7) is displaced.

2. The device according to claim 1, wherein said displacement means comprise a rack and pinion (10) secured to said moveable frame (2), at least one first pinion (11) rotatably mounted on the fastening point (7) of said connecting rod (12) and engaged with this rack and pinion (10), and means for placing this pinion (11) in rotation under the action of said jack (4).

3. The device according to claim 2, wherein said means for putting in rotation comprise at least a second pinion (13) secured in rotation to said first pinion (11), engaged with a chain (14) connected at its two ends to said stationary frame (1).

4. The device according to claim 3, wherein elastic means (15a, 15b) are interposed between the ends of said chain (14) and said stationary frame (1).

5. The device according to any one of the preceding claims, wherein elastic and/or damping means (17a, 17b, 18a, 18b) are interposed between said stationary frame (1) and said moveable frame (2).

6. An agricultural spraying machine equipped with a device in compliance with any one of the preceding claims.
